# FASCICULE DE BREVET EUROPEEN

(11) **EP 4 457 145 B1**
(45) Date de publication et mention de la délivrance du brevet: **15.10.2025**
(21) Numéro de dépôt: 22850598.8
(22) Date de dépôt: 27.12.2022
(51) Int. Cl.: B64G 1/40, F42B 15/00

(54) **SYSTÈME DE PROPULSION À IMPULSION**
IMPULSANTRIEBSSYSTEM
IMPULSE PROPULSION SYSTEM

(30) Priorité: 28.12.2021 FR 2114570
(43) Date de publication de la demande: 06.11.2024
(73) Titulaire: Warpa (World Advance Research Project Agency), 31200 Toulouse (FR)
(72) Inventeur: GENESTE, Jean-François, 31200 Toulouse (FR)
(74) Mandataire: Ipside
(86) Numéro de dépôt international: PCT/FR2022/052510
(87) Numéro de publication internationale: WO 2023/126613

(56) Documents cités:
- EP-A1- 0 708 520
- US-A1- 2004 011 924
- US-A1- 2006 183 399
- US-A1- 2018 290 770

## Description

### Domaine technique de l'invention

L'invention concerne un système de propulsion, et plus spécifiquement un système de propulsion à impulsion.

L'invention est notamment destinée à une application dans le domaine spatial, pour équiper un véhicule spatial tel qu'un satellite.

### Technique antérieure

La propulsion spatiale, à ce jour, est basée sur le principe de l'action et de la réaction. De manière schématique, elle se traduit, en termes de propulsion, par la conservation de la quantité de mouvement dans un système isolé. Typiquement, si des gaz sont éjectés d'un véhicule spatial avec une certaine quantité de mouvement, une quantité de mouvement de même module et de sens opposé à celle des gaz est transmise audit véhicule spatial. Dans un tel cas, il faut consommer de la matière pour avancer, puisqu'une quantité de mouvement doit être éjectée à l'extérieur du véhicule spatial. L'efficacité d'un système de propulsion se mesure par une grandeur appelée impulsion spécifique, dont l'unité est la seconde. Cependant, cette grandeur ne représente pas tout. En effet, actuellement, pour placer un satellite de télécommunications de six tonnes d'une orbite de transfert géostationnaire (appelée également orbite « GTO », de l'anglo-saxon « geostationary transfert orbit ») en orbite géostationnaire (appelée également orbite « GEO », de l'anglo-saxon « geostationary orbit »), avec une propulsion chimique dont l'impulsion spécifique du moteur est de 320 secondes, huit jours sont nécessaires et trois tonnes de carburant sont embarquées à bord dudit satellite. Avec une propulsion électrique dont l'impulsion spécifique du moteur est de 1500 secondes, huit mois sont nécessaires mais seulement 400 kg de carburant (généralement du xénon) sont embarqués, ramenant la masse du satellite à moins de quatre tonnes.

En d'autres termes, les systèmes actuels de propulsion électrique ont une forte impulsion spécifique, mais une faible poussée, ce qui se traduit par des temps de missions très importants et des coûts de lancement plus faibles, car la masse du carburant, pour une mission donnée, est beaucoup plus faible que pour les systèmes de propulsion chimique.

Par ailleurs, une fois qu'un satellite, quel qu'il soit, est à poste, son orbite décrit un plan. Un changement de plan n'est actuellement pas envisageable du fait d'une trop grande consommation de carburant.

D'autre part, un satellite en orbite polaire, donc à défilement, a globalement une durée de vie de cinq ans, durée de vie correspondant au temps qu'il faut pour consommer le carburant embarqué. Le document US2018290770 A1 divulgue un système de l'art antérieur avec des projectiles mobiles dans des disques contrarotatives.

Enfin, les débris spatiaux devenant plus nombreux, le nombre de manœuvres d'évitement augmente et en conséquence, la durée de vie des satellites en orbite basse diminue potentiellement.

### Présentation de l'invention

La présente invention vise à remédier aux inconvénients précités.

A cet effet, il est proposé par la présente invention un système de propulsion comportant un moteur comportant une paire de tubes longitudinaux parallèles, chaque tube longitudinal comportant une première extrémité et une seconde extrémité, et délimitant un volume interne rempli d'un fluide. Chaque tube longitudinal comprend :
- un projectile, configuré pour se déplacer longitudinalement dans le volume interne, et solidaire fixement d'une hélice,
- un mécanisme de lancement du projectile dans le volume interne, depuis la première extrémité dudit tube longitudinal, l'hélice étant agencée pour transformer un mouvement de translation du projectile en un mouvement de rotation,
- un dispositif de freinage de la rotation du projectile dans le volume interne, disposé au niveau de la seconde extrémité du tube longitudinal,
- un dispositif de rappel du projectile depuis la deuxième extrémité vers la première extrémité du tube longitudinal,
- un dispositif de dissipation de la chaleur.

Ledit mécanisme de lancement du projectile et ledit dispositif de rappel du projectile étant alimentés par au moins une source d'alimentation.

Chaque tube longitudinal comporte, dans son volume interne, un projectile et une hélice solidaire fixement du projectile.

On comprend par « solidaire fixement » qu'il n'y a aucun degré de liberté entre le projectile et l'hélice.

Lesdites hélices des projectiles situés dans les deux tubes longitudinaux sont contrarotatives. Ainsi, lorsque les hélices seront en rotation, deux moments cinétiques identiques, mais opposés, seront créés et s'annuleront sensiblement. Un tel système de propulsion est un système de propulsion à poussée par impulsion. A chaque lancement du projectile dans son tube longitudinal par le mécanisme de lancement, le projectile se voit communiquer une quantité de mouvement vers la seconde extrémité du tube longitudinal. Lors de l'impulsion, les tubes longitudinaux, et donc le système de propulsion, se voient communiquer une quantité de mouvement dans le sens opposé, conformément au principe de l'action et de la réaction décrit plus haut.

Le système de propulsion selon l'invention permet avantageusement de convertir le mouvement de translation du projectile en partie en mouvement de rotation, grâce à la viscosité du fluide. Une partie du mouvement de rotation sera transformée en chaleur, due à la viscosité du fluide, et une autre partie sera transformée, selon la nature du dispositif de freinage, soit en chaleur, soit en énergie électrique. Ainsi, la partie transformée en rotation n'intervient pas dans l'équilibre de la quantité de mouvement longitudinale totale du système.

Le projectile, à un instant donné, a une vitesse de translation non nulle vers la seconde extrémité. Il va donc rencontrer des molécules de fluide et l'hélice va transformer une partie de l'énergie de translation en énergie de rotation du projectile. En fin de course, au niveau de la seconde extrémité du tube longitudinal, le projectile n'a potentiellement plus de vitesse de translation, mais a une vitesse de rotation. Si nous appliquions le principe de conservation de la quantité de mouvement, le moment cinétique devrait être aussi conservé. Or, c'est le fluide contenu dans le volume interne du tube longitudinal, et non le tube longitudinal lui-même, qui met en mouvement l'hélice et le projectile. Nous aurions donc un système avec une conservation de la quantité de mouvement de translation, c'est à dire immobile, mais avec un moment cinétique non nul. Le principe de conservation de la quantité de mouvement dans un système isolé ne s'applique donc pas dans notre cas, car le système n'est pas isolé.

De plus, dans chaque tube longitudinal, la chaleur créée pendant la course du projectile dans le volume interne est évacuée au moyen du dispositif de dissipation de chaleur. Le recours à un dispositif de dissipation de la chaleur montre que le système de propulsion ne fonctionne donc pas comme un système isolé.

Les tubes longitudinaux (volume, longueur), la masse du projectile et l'impulsion donnée au projectile sont dimensionnés de sorte que, dans chaque tube longitudinal, le déplacement en translation du projectile s'arrête au niveau de la seconde extrémité du tube longitudinal.

Le dispositif de rappel du projectile permet avantageusement de ramener le projectile depuis la deuxième extrémité vers la première extrémité du tube longitudinal pour qu'il y soit relancé.

Le système de propulsion selon l'invention est avantageusement un système de propulsion à masse de réaction complètement passive et dissipative, dans lequel chaque projectile et son hélice jouent le rôle de masse de réaction, et sont configurés pour se déplacer librement et passivement dans le volume interne du tube longitudinal dans lequel ils sont disposés. L'hélice est agencée pour transformer un mouvement de translation du projectile en un mouvement de rotation, via une interaction passive et dissipative avec le fluide contenu dans le volume interne du tube longitudinal contenant ladite hélice.

Dans des modes particuliers de réalisation, l'invention répond en outre aux caractéristiques suivantes, mises en œuvre séparément ou en chacune de leurs combinaisons techniquement opérantes.

Dans des modes particuliers de réalisation de l'invention, pour éviter un contact entre le projectile et le tube longitudinal, chaque tube longitudinal comporte un dispositif de maintien du projectile dans le volume interne.

Dans des formes particulières de réalisation de l'invention, le dispositif de maintien du projectile comporte au moins un bras de liaison s'étendant entre le projectile et le tube longitudinal.

Dans des formes particulières de réalisation de l'invention, pour ne pas entraver la rotation du projectile pendant sa course dans le tube longitudinal, le dispositif de maintien et le projectile sont reliés par une liaison pivot.

Dans des modes particuliers de réalisation de l'invention, pour diriger le projectile, chaque tube longitudinal comporte un dispositif de guidage en translation du projectile dans le volume interne.

Dans des formes particulières de réalisation de l'invention, le dispositif de guidage en translation du projectile coopère avec le dispositif de maintien du projectile.

Dans des formes particulières de réalisation de l'invention, une même source d'alimentation est configurée pour alimenter ledit mécanisme de lancement du projectile et ledit dispositif de rappel du projectile d'au moins un tube longitudinal. Dans des formes particulières de réalisation de l'invention, le système de propulsion comporte un dispositif de basculement configuré pour faire pivoter indépendamment chacun des deux tubes longitudinaux autour d'un axe de pivotement respectif parallèle, de préférence de l'ordre de 90°, en sens opposé. Ce dispositif de basculement n'est activé qu'une fois que le projectile a atteint la seconde extrémité du tube longitudinal, pour accélérer le retour du projectile, par le dispositif de rappel du projectile, vers la première extrémité du tube longitudinal.

Dans des configurations particulières de réalisation, pour augmenter la poussée du système de propulsion dans une même direction, ledit système de propulsion comporte une pluralité de paires de tubes longitudinaux parallèles, les paires étant disposées parallèlement entre elles.

L'invention est également relative à un véhicule, notamment un véhicule spatial, comportant un système de propulsion conforme à au moins l'un de ses modes de réalisation. Un véhicule spatial équipé d'un tel système de propulsion verrait son temps de trajet réduit pour une mise en orbite donnée, par rapport à un véhicule spatial équipé des systèmes de propulsion chimique ou électriques conventionnels, sans consommation de carburant.

### Brève description des figures

L'invention sera mieux comprise à la lecture de la description suivante, donnée à titre d'exemple nullement limitatif, et faite en se référant aux figures :
[Fig. 1] illustre un système de propulsion comportant un moteur comprenant une paire de tubes longitudinaux, selon un exemple de réalisation de l'invention,
[Fig. 2] illustre une variante de réalisation d'un projectile dans un tube longitudinal. Dans ces figures, pour des raisons de clarté, les dessins ne sont pas à l'échelle, sauf mention contraire.

### Description des modes de réalisation

La présente invention concerne un système de propulsion.

Ce système de propulsion peut, de manière générale, équiper tout moyen de transport, notamment ceux des domaines aéronautique, spatial, ferroviaire, automobile ou maritime, sans que cela soit restrictif de l'invention.

L'invention est décrite dans le contexte particulier d'un de ses domaines d'application préférés dans lequel le système de propulsion est destiné à être installé dans un véhicule spatial, tel qu'un satellite. Rien n'exclut cependant de disposer le système de propulsion dans tout autre type de véhicules.

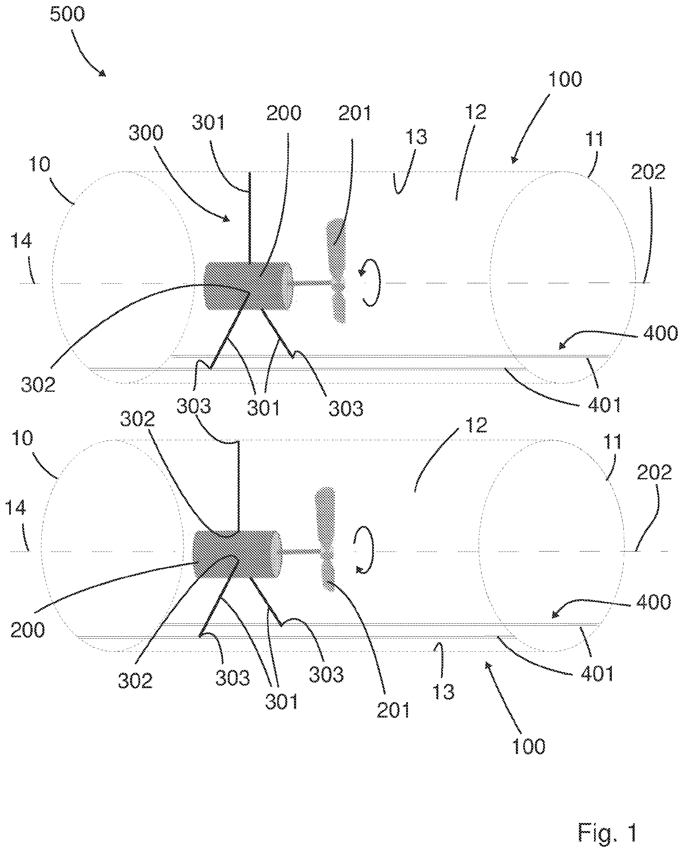

La figure 1 illustre de manière schématique un système de propulsion selon un exemple préféré de réalisation de l'invention.

Le système de propulsion comprend un moteur 500. Ledit moteur comporte au moins une paire de tubes longitudinaux 100.

Dans la suite de la description, le système de propulsion sera décrit dans le cas préféré où le moteur comporte une paire de tubes longitudinaux, comme illustré sur la figure 1.

Les deux tubes longitudinaux 100 sont disposés parallèlement entre eux.

De préférence, les deux tubes longitudinaux 100 sont similaires et indépendants l'un de l'autre.

Chaque tube longitudinal 100 comporte deux extrémités longitudinales, dites première extrémité 10 et seconde extrémité 11. Chaque tube longitudinal 100 est hermétiquement clos, étanche et fermé à ses deux extrémités longitudinales.

Les deux tubes longitudinaux 100 sont avantageusement positionnés dans le même sens, avec leurs premières extrémités 11 disposées du même côté.

Dans l'exemple de la figure 1, les premières extrémités 11 des tubes longitudinaux 100 sont situées sur la gauche de la figure 1.

Chaque tube longitudinal 100 présente, de préférence, une section transversale circulaire, comme illustré sur la figure 1, mais peut également présenter toute autre forme de section transversale, par exemple carrée, rectangulaire, elliptique..., sans que cela soit limitatif de l'invention.

Chaque tube longitudinal 100 est réalisé, de préférence, dans un matériau en carbone.

Chaque tube longitudinal 100 délimite un volume interne 12, creux, dans lequel évolue un fluide.

De préférence, le fluide est un fluide visqueux.

Dans un exemple préféré de réalisation, le fluide est un gaz, tel que l'air.

Dans d'autres exemples de réalisation, le fluide peut être un fluide newtonien ou encore un fluide non newtonien. Pour rappel, un fluide est dit newtonien lorsqu'il ne modifie pas son comportement sous l'effet de contraintes mécaniques.

Dans d'autres exemples de réalisation, le fluide peut être un fluide dont la viscosité change sous l'action d'un champ magnétique ou électrique. Ces fluides sont dits respectivement fluide magnétorhéologique ou fluide électrorhéologique.

Chaque tube longitudinal 100 comporte, dans son volume interne 12, un projectile 200. Ledit projectile est destiné à et configuré pour se déplacer longitudinalement dans le tube longitudinal 100.

Les projectiles 200 de chaque tube longitudinal 100 sont préférentiellement identiques.

Dans une première variante de réalisation, comme illustré sur la figure 1, chaque projectile 200 peut par exemple se présenter sous la forme d'un cylindre fermé, creux ou plein. Chaque projectile 200 peut présenter, par exemple, une section transversale circulaire, carrée, rectangulaire, elliptique..., sans que cela soit limitatif de l'invention. Le projectile présente une longueur très inférieure à la longueur du tube longitudinal.

Dans un exemple de réalisation, comme illustré sur la figure 1, le tube longitudinal 100 et son projectile 200 présentent une même section transversale.

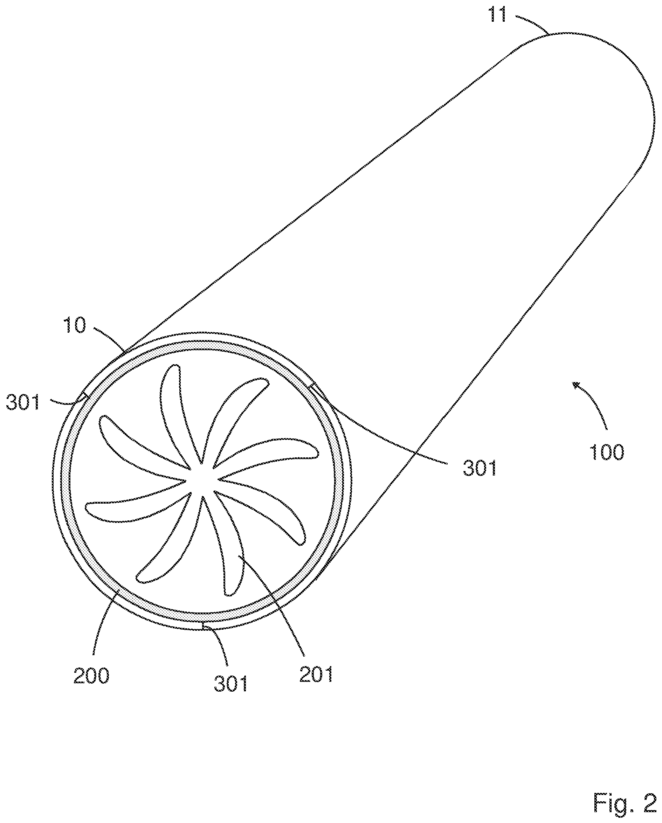

Dans une deuxième variante de réalisation du projectile, comme illustré sur la figure 2, lorsque les tubes longitudinaux 100 présentent une section transversale circulaire, chaque projectile 200 peut se présenter sous la forme d'un cylindre annulaire, creux, ouvert à ses extrémités, dont la paroi est située à proximité d'une face interne 13 du tube longitudinal 100. La masse du projectile 100 est ainsi répartie proche de la périphérie du tube longitudinal 100.

Chaque projectile 200 est solidaire fixement d'une hélice 201.

Par solidaire fixement, on entend qu'il n'y a aucun degré de liberté entre le projectile 200 et l'hélice 201. En d'autres termes, lorsque l'hélice 201 tourne, elle entraîne en rotation le projectile. L'hélice 201, lorsqu'elle tourne sur elle-même, entraine en rotation le projectile sur lui-même.

On comprend bien qu'un projectile 200 et son hélice 201 sont tous les deux disposés dans le volume interne 12 d'un tube longitudinal. Il y a donc autant d'hélices que de projectiles, et que de tubes longitudinaux.

Chaque projectile 200 et son hélice 201 sont disposés dans un tube longitudinal 100 de telle sorte qu'un axe de rotation 202 de l'hélice, et par conséquent un axe de rotation du projectile, est parallèle ou confondu avec un axe de révolution 14 dudit tube longitudinal 100. De préférence, l'axe de rotation 202 de l'hélice 201 est confondu avec l'axe de révolution 14 dudit tube longitudinal 100, comme illustré sur la figure 1.

Dans un exemple de réalisation, pour des projectiles selon la première variante de réalisation, comme illustré sur la figure 1, les hélices 201 des projectiles 200 sont situées à une extrémité du projectile, du même côté, dans leurs tubes longitudinaux 100 respectifs.

De préférence, comme illustré sur la figure 1, dans chaque tube longitudinal 100, le projectile 200 fait face à la première extrémité 10 dudit tube longitudinal 100 et l'hélice 201 fait face à la seconde extrémité 11 dudit tube longitudinal 100.

Dans un autre exemple de réalisation, pour des projectiles selon la deuxième variante de réalisation, comme illustré sur la figure 2, les hélices 201 des projectiles sont situées à l'intérieur du cylindre formant les projectiles, dans leurs tubes longitudinaux 100 respectifs. Ainsi, les projectiles 100 perturbent moins l'écoulement.

Avantageusement, les hélices 201 des projectiles 200 situés dans les tubes longitudinaux 100 de la paire de tubes longitudinaux sont contrarotatives, c'est à dire qu'elles tournent en sens inverse. Ainsi, lorsque les hélices 201 tourneront, deux moments cinétiques identiques seront simultanément créés, mais opposés, dont la somme est approximativement nulle. Ainsi, un véhicule spatial qui serait équipé d'un système de propulsion avec un nombre pair de tubes longitudinaux 100 et l'agencement des hélices tel que décrit ne sera pas déstabilisé lors de la poussée.

L'efficacité de l'hélice 201, c'est à dire sa capacité à transformer le mouvement de translation du projectile 200 en un mouvement de rotation, dépend notamment du fluide contenu dans le tube longitudinal et de la pression dans le volume interne dudit tube longitudinal.

Dans des exemples de réalisation, non limitatifs de l'invention, une hélice 201 peut être une hélice de type hélice d'avion, de type hélice de compresseur basse pression des réacteurs d'avion, de type hélice de compresseur centrifuge.

Dans une forme améliorée de réalisation, l'hélice est une hélice à pas variable. De préférence, un dispositif électronique, ou mécanique, est configuré pour ajuster le pas, notamment en modifiant l'angle de calage des pales de l'hélice.

Chaque tube longitudinal 100 comporte de préférence un dispositif de maintien 300 du projectile dans le volume interne 12 dudit tube longitudinal. Un tel dispositif de maintien 300 permet avantageusement de conserver le positionnement du projectile 200 à distance de la face interne 13 du tube longitudinal 100, afin que le projectile 200, et/ou son hélice 201, ne touche ladite face interne pendant le fonctionnement du moteur.

De préférence, le dispositif de maintien 300 du projectile est identique pour les deux tubes de la paire de tubes longitudinaux 100.

Dans un exemple de réalisation d'un dispositif de maintien 300, ledit dispositif de maintien comporte au moins un bras de liaison 301, de préférence, une pluralité de bras de liaison 301. Chaque bras de liaison 301 est rigide et s'étend entre le projectile 200 et le tube longitudinal 100. Chaque bras de liaison 301 comporte une première extrémité 302 agencée du côté du projectile 200 et une seconde extrémité 303 agencée du côté du tube longitudinal 100.

De préférence, lorsque le dispositif de maintien 300 comporte une pluralité de bras de liaison 301, ceux-ci sont disposés dans un même plan.

Dans l'exemple non limitatif de réalisation décrit à la figure 1, le dispositif de maintien 300 comporte trois bras de liaison 301 disposés à 120° les uns des autres. Un tel nombre et agencement des bras de liaison est particulièrement adapté lorsque le tube longitudinal est de section circulaire par exemple.

Dans un autre exemple de réalisation, non représenté sur les figures, le dispositif de maintien comporte quatre bras de liaison disposés à 90° les uns des autres. Un tel nombre et agencement des bras de liaison est particulièrement adapté lorsque le tube longitudinal est de section carrée ou rectangulaire par exemple.

Le dispositif de maintien 300 est de préférence relié au projectile 200 de telle sorte qu'il n'empêche pas la rotation du projectile 200 sur lui-même, autour de son axe de rotation. En d'autres termes, le dispositif de maintien et le projectile sont reliés par une liaison à un seul degré de liberté. Ce seul degré de liberté est un degré de liberté en rotation, autorisant la rotation du projectile autour de son axe de rotation. La liaison est une liaison pivot.

Dans un exemple de réalisation, le dispositif de maintien est relié au projectile via au moins un roulement (non représenté).

Dans une forme de réalisation, lorsque le dispositif de maintien 300 comporte une pluralité de bras de liaison 301 disposés dans un même plan, chaque première extrémité 302 de bras de liaison est reliée au projectile 200 via un seul roulement.

Chaque tube longitudinal 100 comporte de préférence un dispositif de guidage en translation 400 du projectile. Un tel dispositif de guidage en translation 400 permet avantageusement de garantir le déplacement du projectile 200 de manière longitudinale dans le tube longitudinal 100 entre les deux extrémités longitudinales 10, 11. Ledit dispositif de guidage en translation 400 coopère avantageusement avec le dispositif de maintien 300 du projectile.

De préférence, le dispositif de guidage en translation 400 est identique pour les deux tubes de la paire de tubes longitudinaux 100.

Dans un exemple de réalisation d'un dispositif de guidage en translation 400, comme illustré sur la figure, le dispositif de guidage en translation 400 comporte au moins une rainure longitudinale 401, formée dans le tube longitudinal 100, depuis la face interne 13.

Le tube longitudinal 100 comporte préférentiellement autant de rainures longitudinales 401 que de bras de liaison 301. La seconde extrémité 303 de chaque bras de liaison 301 est configurée pour glisser, coulisser ou rouler dans une rainure longitudinale 401 associée.

Chaque tube longitudinal 100 comporte un mécanisme de lancement du projectile (non représenté sur la figure). Ledit mécanisme de lancement du projectile est configuré pour exercer une poussée sur le projectile 200 de sorte à le mettre en mouvement et à le lancer dans le tube longitudinal 100.

Le mécanisme de lancement du projectile est préférentiellement disposé au niveau de la première extrémité 10 du tube longitudinal 100. Le projectile 200 se déplace ainsi dans le tube longitudinal 100 depuis la première extrémité 10 vers la seconde extrémité 20.

De préférence, le mécanisme de lancement du projectile est identique pour les deux tubes de la paire de tubes longitudinaux 100.

Dans un exemple de réalisation, le mécanisme de lancement du projectile peut comporter un électroaimant.

Dans un autre exemple de réalisation, le mécanisme de lancement du projectile peut comporter un système mécanique de type catapulte ou ressort de compression.

Dans l'exemple de réalisation où le mécanisme de lancement du projectile est un ressort de compression, le projectile est lancé dans le tube longitudinal par la détente dudit ressort de compression qui a préalablement été comprimé.

De préférence, au moins une source d'alimentation (non représentée sur la figure), électrique, est configurée pour activer le mécanisme de lancement du projectile dans chaque tube longitudinal 100. Ladite au moins une source d'alimentation est avantageusement reliée aux panneaux solaires installés sur le véhicule spatial ou les batteries embarquées à bord dudit véhicule spatial.

Ainsi, au niveau de chaque tube longitudinal 100, le mécanisme de lancement du projectile est avantageusement configuré pour donner une impulsion de départ au projectile 100, à une vitesse prédéterminée. Ledit projectile se voit alors communiquer une quantité de mouvement, ou une énergie cinétique, vers la seconde extrémité 11 du tube longitudinal 100. Au moment de cette impulsion, le tube longitudinal 100 se voit quant à lui communiquer une quantité de mouvement égale, dans le sens opposé. Pendant l'avancement du projectile 200 dans le tube longitudinal 100, les pales de l'hélice 201 vont subir une trainée, qui va freiner le projectile 200, et une portance qui va entrainer en rotation l'hélice 201 et donc le projectile 200. Grâce à l'hélice 201, le mouvement de translation du projectile 200 dans un tube longitudinal 100 va ainsi se transformer progressivement en mouvement de rotation. Ce mouvement de rotation du projectile 200 va entrainer un freinage progressif du déplacement en translation du projectile 200 dans le tube longitudinal 100, tout en créant de la chaleur.

Chaque pale de l'hélice 201 va avoir une traînée de forme et une traînée de frottement. La trainée de frottement, liée à la viscosité du fluide, va permettre le mouvement selon les lois bien connues de la mécanique des fluides. Dans une réalisation particulière, les pales de l'hélice seront conçues de manière à maximiser la traînée de frottement. C'est ce frottement qui va générer de la chaleur, et, cette chaleur étant rejetée à l'extérieur, rend le système non isolé, d'où une non conservation de la quantité de mouvement globale.

Dans la forme de réalisation où l'hélice est une hélice à pas variable, le dispositif électronique, ou mécanique, associé est configuré pour ajuster le pas pendant le déplacement du projectile dans son tube longitudinal, permettant de maximiser les frottements.

En d'autres termes, au niveau de chaque tube longitudinal 100, l'énergie cinétique de translation initiale du projectile 200 est partiellement transformée d'une part en énergie cinétique de rotation et d'autre part en chaleur. C'est cette part d'énergie cinétique de rotation, créée « naturellement », qui sera obtenue, essentiellement, en équivalent de quantité de mouvement transmise au véhicule spatial à la fin du processus de déplacement du projectile dans le tube longitudinal.

Les tubes longitudinaux 100 sont dimensionnés en longueur pour que le déplacement en translation du projectile 200 s'arrête à proximité de la seconde extrémité 11 du tube longitudinal 100, au plus près de ladite seconde extrémité, sans que le projectile 200 ou l'hélice 201 du projectile 200 ne touche ladite seconde extrémité 11.

La longueur d'un tube longitudinal 100 est notamment fonction de la masse du projectile, de l'impulsion donnée au projectile 200 par le mécanisme de lancement du projectile, de l'efficacité de l'hélice, dans l'environnement de fluide dans lequel évolue le projectile, et de la viscosité du fluide, laquelle viscosité peut dépendre de paramètres tels que la température ou encore de paramètres régulés extérieurement comme un champ électromagnétique, électrique ou magnétique selon la nature même du fluide. Le calcul de cette longueur est à la portée de l'homme du métier.

Dans un exemple de réalisation, chaque tube longitudinal peut présenter une longueur de l'ordre de 4 m et un diamètre de l'ordre de 50 cm, avec une masse de projectile de l'ordre du kilogramme. La vitesse de lancement du projectile est de l'ordre de 400 à 500 km/h.

Comme décrit précédemment, pour chaque tube longitudinal 100, suite à l'impulsion donnée au projectile 200, de la chaleur est créée dans ledit tube longitudinal pendant le déplacement du projectile, en raison des frottements du fluide. Chaque tube longitudinal 100 comporte avantageusement un dispositif de dissipation de la chaleur (non représenté sur la figure).

De préférence, le dispositif de dissipation de la chaleur est identique pour les deux tubes de la paire de tubes longitudinaux 100.

Dans un exemple de réalisation, le dispositif de dissipation de la chaleur est un radiateur de type ailette.

Dans l'application préférée où le système de propulsion équipe un véhicule spatial, pour chaque tube longitudinal 100, le dispositif de dissipation de la chaleur associé ne peut échanger avec l'espace vide que via une radiation de corps noir. Le dispositif de dissipation de la chaleur est donc avantageusement configuré pour émettre donc des photons, ces photons ayant une quantité de mouvement.

Le dispositif de dissipation de la chaleur de chaque tube longitudinal 100 est avantageusement agencé pour que l'émission des photons s'effectue dans une direction favorisant l'augmentation de quantité de mouvement du système de propulsion, donc du véhicule spatial.

Cette émission de photons garantit avantageusement que le système de propulsion ne peut donc pas être considéré comme un système isolé.

Comme décrit précédemment, pour chaque tube longitudinal 100, après le lancement du projectile 200, la course en translation du projectile 200 s'arrête au niveau de la seconde extrémité 11 du tube longitudinal 100. Le projectile 200 est, au niveau de cette seconde extrémité 11, uniquement en rotation et tourne sur lui-même à une certaine vitesse.

Chaque tube longitudinal 100 comporte avantageusement un dispositif de freinage de la rotation du projectile (non représenté sur la figure).

De préférence, le dispositif de freinage est identique pour les deux tubes de la paire de tubes longitudinaux 100.

Dans des exemples de réalisation, le dispositif de freinage comporte un frein électromagnétique ou un frein mécanique.

Le freinage de la rotation du projectile dans chaque tube longitudinal va créer un moment cinétique parasite de rotation contraire. Or, le moteur du système de propulsion comportant une paire de tubes longitudinaux, à l'intérieur desquels les projectiles avec leurs hélices tournent de manière contrarotative, le freinage, en première approximation, n'aura pas de conséquence au niveau du système de propulsion et donc au niveau du véhicule spatial, car les moments cinétiques de rotation vont sensiblement s'annuler.

Comme décrit précédemment, pour chaque tube longitudinal 100, après le lancement du projectile 200, la course en translation du projectile 200 s'arrête au niveau de la seconde extrémité 11 du tube longitudinal 100 puis le projectile 200 est freiné en rotation.

Chaque tube longitudinal 100 comporte un dispositif de rappel du projectile (non représenté sur la figure 1) vers la première extrémité 10 dudit tube longitudinal 100.

De préférence, le dispositif de rappel du projectile est identique pour les deux tubes de la paire de tubes longitudinaux 100.

Ce dispositif de rappel du projectile est configuré pour ramener le projectile 200 situé au niveau de la seconde extrémité 11 vers la première extrémité 10 du tube longitudinal 100 afin d'y être relancé si nécessaire, via le mécanisme de lancement du projectile.

Le dispositif de rappel du projectile est préférentiellement configuré pour ramener le projectile 200 à une vitesse constante, inférieure à la vitesse de lancement du projectile dans le tube transversal. Le retour du projectile 200 vers la première extrémité 10 à une vitesse constante permet avantageusement de ne pratiquement pas créer de quantité de mouvement parasite au niveau du système de propulsion, et donc du véhicule spatial.

Dans des exemples de réalisation, le dispositif de rappel du projectile peut comporter un électroaimant ou un dispositif à vis sans fin.

Dans une variante de réalisation, pour accélérer le retour du projectile 200 vers la première extrémité 10 du tube longitudinal 100, le système de propulsion peut comporter un dispositif de basculement (non représenté sur la figure 1). Un tel dispositif de basculement est configuré pour faire pivoter indépendamment chacun des deux tubes longitudinaux 100 autour d'un axe de pivotement respectif parallèle, d'un angle de l'ordre de 90°, mais en sens opposé. Les projectiles 200 de chaque tube longitudinal 100 sont ensuite ramenés vers la première extrémité 10 du tube longitudinal 100 associé, donc à contresens, avec le dispositif de rappel associé précédemment décrit. Le retour de chaque projectile 200 vers la première extrémité 10 du tube longitudinal 100 associé peut être réalisé plus rapidement car d'une part les quantités de mouvement créées s'annulent et d'autre part que les quantités de mouvement créées ne parasitent pas la quantité de mouvement communiquée au projectile dans l'axe de révolution du tube longitudinal lors de l'impulsion, et donc la quantité de mouvement inverse transmise au tube longitudinal, lors de l'impulsion, et par conséquent au système de propulsion.

Le système comporte au moins une source d'alimentation (non représentée sur la figure), électrique, configurée pour activer le dispositif de rappel du projectile dans chaque tube longitudinal.

Ladite au moins une source d'alimentation électrique est reliée aux panneaux solaires installés sur le véhicule spatial ou les batteries embarquées à bord dudit véhicule spatial.

Dans une forme de réalisation, une source d'alimentation commune, électrique, est configurée pour activer le mécanisme de lancement du projectile et pour activer le dispositif de rappel du projectile d'un tube longitudinal.

Le système de propulsion selon l'invention tel que décrit est donc un système de propulsion à poussée par impulsion et non un système de propulsion à poussée continue.

A chaque lancement des projectiles 200 dans les deux tubes longitudinaux 100, les tubes longitudinaux, et donc le système de propulsion, se voit communiquer une quantité de mouvement égale, mais opposée, à la quantité de mouvement communiqué au projectile.

De préférence, pour éviter un déséquilibre du véhicule spatial, les lancements des projectiles 200 dans les deux tubes longitudinaux 100 sont réalisés de manière synchronisée.

Selon la fréquence des impulsions, c'est-à-dire selon la fréquence de lancement des projectiles 200 dans chaque tube longitudinal 100, dépendra la poussée moyenne par unité de temps du système de propulsion.

La fréquence de impulsions dépend notamment du temps mis par le projectile 200 dans chaque tube longitudinal 100 pour revenir, avec le dispositif de retour, de la seconde extrémité 11 du tube longitudinal 100 à la première extrémité 10, le type de dispositif de retour choisi pour faire revenir le projectile 200.

La poussée du système de propulsion, dans une même direction, peut également être augmentée en augmentant le nombre de paires de tubes longitudinaux 100, chaque paire de tubes longitudinaux étant disposée parallèlement entre elles, avec tous les tubes longitudinaux dans le même sens.

Dans des modes de réalisation particuliers, non représentés sur la figure, pour améliorer notamment l'efficacité des hélices 201, chaque tube longitudinal 100 peut comporter un dispositif de modification de la viscosité de fluide et/ou un dispositif de modification de la température du fluide et/ou un dispositif de modification de la pression du fluide.

Dans un mode de réalisation, pour réaliser des poussées dans toutes les directions, la au moins une paire de tubes longitudinaux est montée sur un système multiaxes configuré pour orienter ladite au moins une paire de tubes longitudinaux dans une direction, opposée à la direction de poussée souhaitée.

Dans des modes de réalisation, les dispositifs de freinage de la rotation du projectile 200 dans les tubes longitudinaux créant des moments cinétiques parasites, le véhicule spatial comportant le système de propulsion peut comporter des roues d'inertie configurées pour créer un moment cinétique embarqué destiné à équilibrer le véhicule spatial.

Dans un système de propulsion comportant un nombre donné de paires de tubes longitudinaux disposée parallèlement, le système de propulsion peut donc être configuré de deux façons :
a) soit tous les projectiles 200 de toutes les paires de tubes longitudinaux 100 sont lancés de manière synchronisée : dans ce cas, la poussée sera augmentée. La fréquence des impulsions dépend notamment du temps mis par le projectile dans chaque tube longitudinal pour se déplacer de la première extrémité à la seconde extrémité du tube longitudinal, et pour revenir, avec le dispositif de retour, de la seconde extrémité à la première extrémité du tube longitudinal,
b) soit les projectiles 200 de chaque paire de tubes longitudinaux 100 sont lancés successivement : dans ce cas, la poussée sera moindre que si tous le projectiles de toutes les paires de tubes longitudinaux sont lancés de manière synchronisée, mais la fréquence des impulsions sera augmentée.

La configuration choisie peut dépendre du véhicule dans lequel sera utilisé le système de propulsion, et notamment des manœuvres réalisées par le véhicule. Dans le cas de l'utilisation du système de propulsion dans une application privilégiée au domaine spatial, le véhicule spatial équipé d'un tel système de propulsion peut utiliser la configuration de forte poussée (configuration a)) pour certaines manœuvres, telles que par exemple la manœuvre de circularisation d'orbite, et la configuration d'une poussée plus faible, mais plus fréquente (configuration b)), pour d'autres manœuvres, telles que par exemple des manœuvres dans des environnements « perturbés » (planètes à atmosphère pour favoriser l'aérocapture, accélération gravitationnelle à proximité de planètes dissymétriques, etc.).

## Revendications

1. Système de propulsion comportant un moteur comportant une paire de tubes longitudinaux (100) parallèles, chaque tube longitudinal (100) comportant une première extrémité (10) et une seconde extrémité (11), et délimitant un volume interne (12) rempli d'un fluide, chaque tube longitudinal (100) comprenant :
- un projectile (200), configuré pour se déplacer longitudinalement dans le volume interne (12), et solidaire fixement d'une hélice (201), sans degré de liberté entre le projectile et l'hélice,
- un mécanisme de lancement du projectile dans le volume interne (12), depuis la première extrémité (10) dudit tube longitudinal (100), l'hélice (201) étant agencée pour transformer un mouvement de translation du projectile (200) en un mouvement de rotation,
- un dispositif de freinage de la rotation du projectile (200) dans le volume interne (12), disposé au niveau de la seconde extrémité (11) du tube longitudinal (100),
- un dispositif de rappel du projectile (200) depuis la deuxième extrémité (11) vers la première extrémité (10) du tube longitudinal,
- un dispositif de dissipation de la chaleur,
- au moins une source d'alimentation,
ledit mécanisme de lancement du projectile (200) et ledit dispositif de rappel du projectile (200) étant alimentés par l'au moins une source d'alimentation,
lesdites hélices (201) des projectiles situés dans les deux tubes longitudinaux (100) étant contrarotatives.

2. Système de propulsion selon la revendication 1 dans lequel chaque tube longitudinal (100) comporte un dispositif de maintien (300) du projectile dans le volume interne (12).

3. Système de propulsion selon la revendication 2 dans lequel le dispositif de maintien (300) du projectile comporte au moins un bras de liaison (301) s'étendant entre le projectile (200) et le tube longitudinal (100).

4. Système de propulsion selon l'une des revendications 2 ou 3 dans lequel le dispositif de maintien (300) et le projectile (200) sont reliés par une liaison pivot.

5. Système de propulsion selon l'une des revendications précédentes dans lequel chaque tube longitudinal (100) comporte un dispositif de guidage en translation (400) du projectile dans le volume interne (12).

6. Système de propulsion selon la revendication 5 et l'une des revendications 2 à 4 dans lequel le dispositif de guidage en translation (400) du projectile (200) coopère avec le dispositif de maintien (300) du projectile.

7. Système de propulsion selon l'une des revendications précédentes dans lequel la même source d'alimentation est configurée pour alimenter ledit mécanisme de lancement du projectile (200) et ledit dispositif de rappel du projectile (200) d'au moins un tube longitudinal (100).

8. Système de propulsion selon l'une des revendications précédentes comportant un dispositif de basculement configuré pour faire pivoter indépendamment chacun des deux tubes longitudinaux (100) autour d'un axe de pivotement respectif parallèle.

9. Système de propulsion selon l'une des revendications précédentes comportant une pluralité de paires de tubes longitudinaux (100) parallèles, les paires étant disposées parallèlement entre elles.

10. Véhicule spatial comportant un système de propulsion selon l'une des revendications précédentes.

## Patentansprüche

1. Antriebssystem, das einen Motor aufweist, der ein Paar parallel verlaufende Längsrohre (100) aufweist, wobei jedes Längsrohr (100) ein erstes Ende (10) und ein zweites Ende (11) aufweist, und ein mit einem Fluid gefülltes Innenvolumen (12) begrenzt, wobei jedes Längsrohr (100) Folgendes umfasst:
- ein Geschoss (200), das so konfiguriert ist, dass es sich längs in dem inneren Volumen (12) bewegt und fest mit einem Propeller (201) verbunden ist, ohne Freiheitsgrad zwischen dem Geschoss und dem Propeller,
- einen Geschossabwurfmechanismus in dem Innenvolumen (12) von dem ersten Ende (10) des Längsrohrs (100), wobei der Propeller (201) so angeordnet ist, dass er eine Translationsbewegung des Geschosses (200) in eine Drehbewegung umwandelt,
- eine Bremsvorrichtung der Drehung des Geschosses (200) in dem Innenvolumen (12), die an dem zweiten Ende (11) des Längsrohrs (100) angeordnet ist,
- eine Geschossrückstellvorrichtung (200) von dem zweiten Ende (11) zu dem ersten Ende (10) des Längsrohrs,
- eine Vorrichtung zur Wärmeableitung,
- mindestens eine Stromquelle,
wobei der Geschossabwurfmechanismus (200) und die Geschossrückstellvorrichtung (200) von der mindestens einen Stromversorgungsquelle versorgt werden,
wobei die Propeller (201) der Geschosse, die sich in den beiden Längsrohren (100) befinden, gegenläufig sind.

2. Antriebssystem nach Anspruch 1, wobei jedes Längsrohr (100) eine Haltevorrichtung (300) des Geschosses in dem Innenvolumen (12) aufweist.

3. Antriebssystem nach Anspruch 2, wobei die Haltevorrichtung (300) des Geschosses mindestens einen Verbindungsarm (301) aufweist, der sich zwischen dem Geschoss (200) und dem Längsrohr (100) erstreckt.

4. Antriebssystem nach einem der Ansprüche 2 oder 3, wobei die Haltevorrichtung (300) und das Geschoss (200) durch eine Drehverbindung verbunden sind.

5. Antriebssystem nach einem der vorhergehenden Ansprüche, wobei jedes Längsrohr (100) eine Vorrichtung zur Führung des Geschosses in Translation (400) in dem Innenvolumen (12) aufweist.

6. Antriebssystem nach Anspruch 5 und einem der Ansprüche 2 bis 4, wobei die Vorrichtung zur Führung des Geschosses in Translation (400) des Geschosses (200) mit der Haltevorrichtung (300) des Geschosses zusammenarbeitet.

7. Antriebssystem nach einem der vorhergehenden Ansprüche, wobei dieselbe Stromversorgungsquelle so konfiguriert ist, dass sie den Geschossabwurfmechanismus (200) und die Geschossrückstellvorrichtung (200) mit mindestens einem Längsrohr (100) versorgt.

8. Antriebssystem nach einem der vorhergehenden Ansprüche, das eine Kippvorrichtung umfasst, die so konfiguriert ist, dass sie jedes der beiden Längsrohre (100) unabhängig um eine jeweilige parallele Schwenkachse schwenkt.

9. Antriebssystem nach einem der vorhergehenden Ansprüche, das eine Vielzahl von parallelen Längsrohrpaaren (100) aufweist, wobei die Paare parallel zueinander angeordnet sind.

10. Raumfahrzeug mit einem Antriebssystem nach einem der vorhergehenden Ansprüche.

## Claims

1. Propulsion system comprising a motor comprising a pair of parallel longitudinal tubes (100), each longitudinal tube (100) comprising a first end (10) and a second end (11), and defining an internal volume (12) filled with a fluid, each longitudinal tube (100) comprising:
- a projectile (200), configured to move longitudinally in the internal volume (12), and fixedly secured to a propeller (201), with no degree of freedom between the projectile and the propeller,
- a mechanism for launching the projectile in the internal volume (12), from the first end (10) of said longitudinal tube (100), the propeller (201) being arranged so as to transform a translational movement of the projectile (200) into a rotational movement,
- a device for braking the rotation of the projectile (200) in the internal volume (12), positioned at the second end (11) of the longitudinal tube (100),
- a device for returning the projectile (200) from the second end (11) towards the first end (10) of the longitudinal tube,
- a heat dissipation device,
said mechanism for launching the projectile (200) and said device for returning the projectile (200) being powered by at least one power source,
said propellers (201) of the projectiles located in the two longitudinal tubes (100) being contrarotating.

2. Propulsion system according to claim 1, wherein each longitudinal tube (100) comprises a device (300) for holding the projectile in the internal volume (12).

3. Propulsion system of claim 2 wherein the device (300) for holding the projectile comprises at least one connecting arm (301) extending between the projectile (200) and the longitudinal tube (100).

4. Propulsion system according to one of claims 2 or 3, wherein the holding device (300) and the projectile (200) are connected by a pivot connection.

5. Propulsion system according to one of the preceding claims, wherein each longitudinal tube (100) comprises a device (400) for guiding the projectile in translation in the internal volume (12).

6. Propulsion system according to claim 5 and one of claims 2 to 4, wherein the device (400) for guiding the projectile (200) in translation cooperates with the device (300) for holding the projectile.

7. Propulsion system according to one of the preceding claims, wherein the same power source is configured to power said mechanism for launching the projectile (200) and said device for returning the projectile (200) of at least one longitudinal tube (100).

8. Propulsion system according to one of the preceding claims, comprising a tilting device configured to independently pivot each of the two longitudinal tubes (100) about a parallel respective pivot axis.

9. Propulsion system according to one of the preceding claims, comprising a plurality of pairs of parallel longitudinal tubes (100), the pairs being arranged parallel to one another.

10. Spacecraft comprising a propulsion system according to one of the preceding claims.
